# EUROPEAN PATENT APPLICATION

(11) **EP 4 332 154 A1**
(43) Date of publication of application: **06.03.2024**
(21) Application number: 23188951.0
(22) Date of filing: 01.08.2023
(51) Int. Cl.: C08J 9/00, C08J 9/32, B29C 67/20, C08G 8/10, C08J 9/35, C08L 61/02

(54) **SYNTACTIC FOAM**

(30) Priority: 30.08.2022 GB 202212560; 16.11.2022 GB 202217124
(71) Applicant: Advanced Innergy Ltd, Gloucester, GL2 4PA (GB)
(72) Inventor: Palman, Riccardo, Gloucester, GL2 4PA (GB); Conventi, Nicola, Gloucester, GL2 4PA (GB)
(74) Representative: Swindell & Pearson Limited

(57) **Abstract**

A method of forming panels. The method comprises mixing a composition comprising curable resin, microspheres and at least one additive in the presence of a catalyst. The method further comprises transferring the composition to a cuboid shaped mould and allowing the composition to cure in the cuboid shaped mould to form a cuboid shaped body of syntactic foam material. The method further comprises demoulding the cuboid shaped body of syntactic foam material and cutting panels from the cuboid shaped body of syntactic foam material. The method further comprises drying the panels.

## Description

### TECHNOLOGICAL FIELD

Examples of the disclosure relate to syntactic foam, and particularly fire-resistant syntactic foam materials.

### BACKGROUND

Fire resistant syntactic foam materials are known and used to fabricate and insulate components, partitions and elements of structures, such as oil drilling or production platforms, to provide resistance to fires and the intense heat emanating from combustion of crude oil, or natural gas or their derivatives. Syntactic foam materials can also be used to provide insulation in cold conditions.

Generally, a plurality of individual panels comprising syntactic foam material are required to fabricate a large area such as a production platform. Conventionally, each respective panel is individually formed in a mould. However, this is time consuming, labour intensive and can result in inconsistency between panels. It is desirable therefore to provide an improved method of forming panels.

All proportions referred to in this specification are indicated as percentage by weight (wt%) of the total composition.

### BRIEF SUMMARY

According to various, but not necessarily all, examples of the disclosure there is provided a method of forming panels, the method comprising:
mixing a composition comprising curable resin, microspheres and at least one additive in the presence of a catalyst;
transferring the composition to a cuboid shaped mould;
allowing the composition to cure in the cuboid shaped mould to form a cuboid shaped body of syntactic foam material;
demoulding the cuboid shaped body of syntactic foam material;
cutting panels from the cuboid shaped body of syntactic foam material; and
drying the panels.

The catalyst may be added to the composition after the composition has been mixed for an initial period of time, followed by continued mixing of the composition for a further period of time. After adding the catalyst, the composition may be mixed for 10-30 minutes before transferring the composition to the cuboid shaped mould. In some examples, this time period is 15 minutes. The composition is transferred to the cuboid shaped mould over a period of time after mixing has ceased. In some examples, the transfer of the composition takes no longer than 30 minutes. In some of these examples, this is no longer than 20 minutes. The time period between adding the catalyst and completion of the transfer of the composition to the cuboid shaped mould might be less than 60 minutes (e.g., mixing for 10-30 minutes and transfer for up to 30 minutes), and in some examples it might be less than 45 minutes (e.g., mixing for 10-30 minutes and transfer for up to 30 minutes).

Each of the panels cut may have substantially the same dimensions. Possibly, the composition is transferred to a plurality of cuboid shaped moulds.

The composition may be allowed to cure for at least 4 hours, such as 4-6 hours. The composition may be allowed to cure at a minimum temperature of 70°C, such as a temperature in the range 70°C to 100°C (e.g., 80°C). The panels may be cut from the cuboid shaped body of syntactic foam material once the syntactic foam material has cured to a Shore A hardness of at least 50. In some examples, cutting panels commences substantially immediately after demoulding (e.g., within 30 minutes of demoulding).

The panels may be dried for at least 12 hours. The panels may be dried at a minimum temperature of 70°C, such as a temperature in the range 70°C to 100°C (e.g., 80°C). The panels may be dried until the panels have a density of from 50 Kg/m³ to 90 Kg/m³. Possibly, the panels may be dried until the panels have a density of from 70 Kg/m³ to 90 Kg/m³. The panels may be dried 24 hours at a temperature of 80°C to a density of 80 Kg/m³.

Possibly, a sealant is applied to one or more faces of the panels. The sealant might be a hydrophobic sealant. Possibly, an in use upper face of each respective panel is laminated with a top-skin. The top-skin may comprise a glass reinforced phenolic top-skin.

The curable resin may comprise a phenolic resin. Alternatively, the curable resin may comprise a curable bio-based resin. The curable bio-based resin may comprise a polyfurfuryl alcohol resin or a lignin biopolymer resin.

The at least one additive may comprise a reinforcing filler. The reinforcing filer may comprise glass fibres. The glass fibres may comprise a mixture of glass fibres having a relatively shorter length and glass fibres having a relatively longer length. Additionally, or alternatively, the at least one additive may comprise a polymeric foam. The polymeric foam may be expanded polystyrene. Where the composition comprises the polymeric foam, the panels may be dried until the panels have a density of from 50 Kg/m³ to 70 Kg/m³.

The microspheres may comprise a mixture of wet microspheres and dry microspheres. The weight percent ratio of wet microspheres to dry microspheres may be from 6:1 to 1:3, and preferably from 4:1 to 1:2, and most preferably from 3:1 to 1:1.

4 to 8 panels may be cut from the cuboid shaped body of syntactic foam material.

The catalyst may be an acid catalyst. The acid catalyst may be selected from phosphoric acid or sulfonic acid. The catalyst may be a partial phosphate ester. The catalyst may comprise a cure accelerator. The cure accelerator may be para toluene sulphonic acid. In other examples, the catalyst may be an epoxy-based catalyst.

According to various, but not necessarily all, examples of the disclosure there is provided a cuboid shaped body of syntactic foam material formed by the method of any of the preceding paragraphs.

According to various, but not necessarily all, examples of the disclosure there is provided a panel formed by the method of any of the preceding paragraphs.

According to various, but not necessarily all, examples of the disclosure there may be provided examples as claimed in the appended claims.

### BRIEF DESCRIPTION

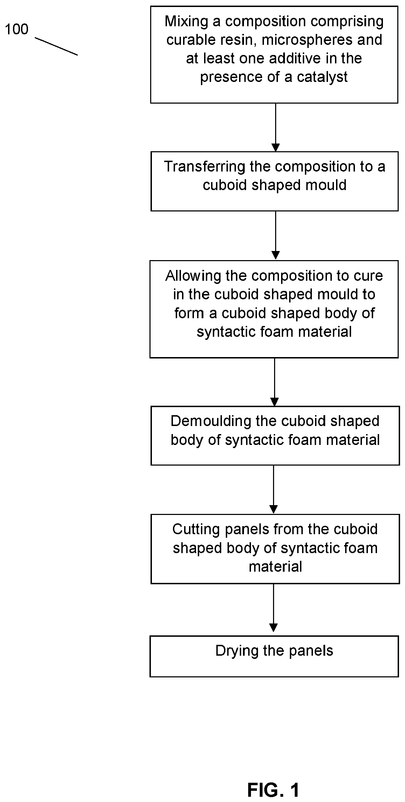

Some examples will now be described with reference to the accompanying drawing. The drawing of Fig. 1 illustrates an example method of forming panels.

### DETAILED DESCRIPTION

Examples of the disclosure provide a method of forming panels. Examples of the disclosure also provide panels and cuboid shaped bodies of syntactic foam material formed by the method.

As illustrated in Fig. 1, the method 100 comprises mixing a composition comprising curable resin, microspheres and at least one additive in the presence of a catalyst. The mixed composition is transferred to a cuboid shaped mould, which may be referred to as 'dumping'. The mixed composition is allowed to cure in the cuboid shaped mould to form a cuboid shaped body of syntactic foam material. The cuboid shaped body of syntactic foam material is demoulded, and panels are then cut from the cuboid shaped body of syntactic foam material, which may be referred to as 'slicing'. The panels are then dried.

Advantageously, cutting panels from a cuboid shaped body of syntactic foam material is less time consuming and labour intensive than forming each respective panel individually in a mould. An increased output of panels produced per day from 70 to 140 has been recorded.

Furthermore, each respective panel cut from the cuboid shaped body of syntactic foam material has substantially identical properties, and thus there is no inconsistency between panels.

Examples of compositions according to the disclosure are provided in Tables 1 to 3 below.

**Table 1**

| Component | Example Component | **E**xample 1 - Amount wt% | Example 2 - Amount wt % |
|---|---|---|---|
| Curable resin | Phenolic resin | 41 | 37.7 |
| Microspheres | Wet microspheres (e.g. Expancel^{®} 920 DE40 d30) | 12.6 | 11.6 |
| | Dry microspheres (e.g. Expancel^{®} 921 WE40 d24) | 30.6 | 28.2 |
| At least one additive | Reinforcing filler (e.g. 6 mm glass fibres) | 1.0 | 0.9 |
| | Reinforcing filler (e.g. 13 mm glass fibres) | 2.6 | 2.4 |
| | Polymeric foam (e.g. expanded polystyrene) | 0 | 8.0 |
| Catalyst | Partial phosphate ester | 12.2 | 11.2 |

**Table 2**

| Component | Example Component | Example 3 - Amount wt% |
|---|---|---|
| Curable bio-based resin | Polyfurfuryl alcohol resin | 41 |
| Microspheres | Wet microspheres (e.g. Expancel^{®} 920 DE40 d30) | 12.6 |
| | Dry microspheres (e.g. Expancel^{®} 921 WE40 d24) | 30.6 |
| At least one additive | Reinforcing filler (e.g. 6 mm glass fibres) | 1.0 |
| | Reinforcing filler (e.g. 13 mm glass fibres) | 2.6 |
| | Polymeric foam (e.g. expanded polystyrene) | 0 |
| Catalyst | Partial phosphate ester | 12.2 |

**Table 3**

| Component | Example Component | Example 4 - Amount wt% |
|---|---|---|
| Curable bio-based resin | Lignin biopolymer resin | 41 |
| Microspheres | Wet microspheres (e.g. Expancel^{®} 920 DE40 d30) | 12.6 |
| | Dry microspheres (e.g. Expancel^{®} 921 WE40 d24) | 30.6 |
| At least one additive | Reinforcing filler (e.g. 6 mm glass fibres) | 1.0 |
| | Reinforcing filler (e.g. 13 mm glass fibres) | 2.6 |
| | Polymeric foam (e.g. expanded polystyrene) | 0 |
| Catalyst | Epoxy-based catalyst | 12.2 |

In some examples, a mixer may be loaded with at least one additive, the wet microspheres and the curable resin. The additive that is loaded at the same time as the wet microspheres and the curable resin might be reinforcing filler, such as glass fibres.

Mixing then commences for a period of time during which at least some of the dry microspheres are added. The catalyst may then be added followed by the remainder of the dry microspheres (if any) as mixing continues. In some examples, at least one additive material is added at the same time as or after the addition of the catalyst (and before the addition of the remainder of the dry microspheres) as mixing continues. This additive material might, for example, be polymeric foam (e.g., expanded polystyrene).

In some examples, syntactic foam material that has been previously cured and dried may be crushed into small particles (e.g., 10-15mm) and added into the composition, prior to transferring the composition to a cuboid shaped mould. This recycled syntactic foam material may be added to the composition during mixing. For example, it could be added after adding the catalyst to the composition. It might be added after adding the remainder of the dry microspheres and/or after adding the polymeric foam. The recycled syntactic foam material might, for example, be derived from dust and/or off-cuts resulting from cutting previous panels out from a previously formed cuboid shaped body of syntactic foam material.

Use of the recycled syntactic foam material advantageously reduces landfill and may reduce costs. In some examples, up to 5wt% of the composition may be recycled material. In other examples, up to 10wt% of the composition may be recycled material. The other components in the composition may be included in the composition in the relative amounts indicated in Tables 1 to 3, subject to up to 5wt% or up to 10wt% of recycled material being added. For instance, in Example 1, if 5wt% of recycled material is added, then the amount of phenolic resin that is present in the composition would be 41wt% x 0.95 = 39.0wt%.

In other examples, the components may be added in a different order.

As explained above, the catalyst may be added to the composition after the composition has been mixed for an initial period of time, followed by continued mixing of the composition for a further period of time. Mixing may continue whilst the catalyst is being added. Other components may be added after the catalyst has been added. Further mixing may take place during and/or after the addition of those components.

After adding the catalyst, the composition may be mixed for 10-30 minutes before transferring the composition to the cuboid shaped mould. In some examples, this time period is 15 minutes. The composition is transferred to the cuboid shaped mould over a period of time after mixing has ceased. In some examples, the transfer of the composition takes no longer than 30 minutes. In some examples, this is no longer than 20 minutes. The time period between adding the catalyst and completion of the transfer of the composition to the cuboid shaped mould might be less than 60 minutes (e.g., mixing for 10-30 minutes and transfer for up to 30 minutes), and in some examples it might be less than 45 minutes (e.g., mixing for 10-30 minutes and transfer for up to 30 minutes).

One or more of the respective components of the composition may be pumped into the mixer through inlets in the mixer, and this may be an automated system.

To obtain improved mixing and better homogeneity of the mixed composition, the mixing blade may comprise a double set of extra blades.

In some examples, the composition may be allowed to cure for at least 4 hours (e.g., 4-6 hours). Preferably, the composition is allowed to cure until the syntactic foam material has a Shore A hardness of at least 50. The composition may be allowed to cure at a minimum temperature of 70°C, such as a temperature in the range 70°C - 100°C (e.g., 80°C).

Once the composition has cured to form the cuboid shaped body of syntactic foam material, a saw blade, such as a wire saw, may be used to cut panels from the cuboid shaped body of syntactic foam material. The panels may be wet when cut from the cuboid shaped body of syntactic foam material. In some examples, the cutting (i.e. slicing) process may be carried out immediately after the cuboid shaped body of syntactic foam material has sufficiently cured, for instance when the syntactic foam material has a Shore A hardness of at least 50. Each of the panels cut may have substantially the same dimensions. In some examples, 4 to 8 panels are cut from the cuboid shaped body of syntactic foam material. Preferably 5 to 7 panels are cut from the cuboid shaped body of syntactic foam material. Most preferably, 6 panels are cut from the cuboid shaped body of syntactic foam material.

In some examples, the panels are dried in an oven for at least 12 hours. The panels may be dried at a temperature of at least 70°C for up to 36 hours (e.g., at 80°C). The drying process may also involve pressing the panels to remove excess water. In some examples, the panels are dried until the panels have a density of from 70 Kg/m³ to 90 Kg/m³, such as 80 Kg/m³. Once the panels have reached the required density, the panels may be removed from the oven. In one example, the panels are dried for 24 hours at a temperature of 80°C, until the panels have a density of about 80 Kg/m³. Where the composition for forming the panels includes a polymeric foam additive, such as example 2 of Table 1, the panels are preferably dried until the panels have a density of from 50 Kg/m³ to 70 Kg/m³, such as 60 Kg/m³.

Depending on the amount of composition being mixed, the composition may be transferred to a plurality of cuboid shaped moulds.

Once the panels have been dried, the method may comprise applying a sealant to one or more faces of the panels. The sealant may be for prevent or mitigating water absorption into the panel. In this regard, the sealant might be a hydrophobic sealant. Advantageously, the sealant is better able to absorb into the surface of a cut face of a panel than into a surface of a panel which has been individually formed in a mould and has a skinned surface, leading to an overall quicker process.

In some examples, an in use upper face of each respective panel is laminated with a top-skin. The top-skin may comprise a glass reinforced phenolic top-skin. The top skin may have a thickness of about 2 mm.

### Curable resin

As detailed in Table 1 above, in some examples the curable resin comprises a phenolic resin. The phenolic resin may comprise phenol-formaldehyde resin with a free formaldehyde to phenol molar ratio of less than one, i.e., a resole phenolic resin. The resole phenolic resin may be a liquid resole phenolic resin, and may be low viscosity, low free formaldehyde, unmodified liquid phenolic resole resin.

As detailed in Tables 2 and 3 above, in some examples the curable resin comprises a curable bio-based resin.

The curable bio-based resin may be plant based. The curable bio-based resin may be derived from a plant or plants. The curable bio-based resin may be substantially derived from a plant or plants. The curable bio-based resin may be exclusively derived from a plant or plants. The curable bio-based resin may be a 100% derived from a plant or plants. The curable bio-based resin may be free from synthetic materials.

As detailed in Table 2, the curable bio-based resin may be a polyfurfuryl alcohol resin. As detailed in Table 3, the curable bio-based resin may be a lignin biopolymer resin.

### Microspheres

Microspheres are lightweight filler. Microspheres are discrete particles, which may be substantially spherical. Polymeric microspheres comprise a polymer shell encapsulating a void. The void may be filled with a gas. Accordingly, each respective polymeric microsphere encapsulates a single void. Microspheres may be wet or dry. Wet microspheres are microspheres which have been wetted with a quantity of water. Wet microspheres may have a solid content of about 5 to 20 wt% (and therefore a water content of 80 to 95 wt%), and preferably about 10 wt% (and therefore a water content of 90 wt%). Dry microspheres are not wetted with water, and are therefore substantially free of water.

An Example of a polymeric microsphere is Expancel^{®} microspheres from Nouryon, which may be expanded Expancel^{®} microspheres. Expancel^{®} 921 WE40 d24 is an example of wet Expancel^{®} having a density of 30 kg/m³ and a particle size of 35 to 55 µm D(0.5). Expancel^{®} 920 DE40 d30 is an example of dry Expancel^{®} having a density of 24 kg/m³ and a particle size of 35 to 55 µm D(0.5), a solid content of 10 % and a volume of 4.2 L/Kg.

In the examples of Tables 1 to 3 above, the microspheres comprise a mixture of wet microspheres and dry microspheres. The weight percent ratio of wet microspheres to dry microspheres is about 2.4:1 in the examples of Tables 1 to 3. In other examples, the weight percent ratio of wet microspheres to dry microspheres is from 6:1 to 1:3, and preferably from 4:1 to 1:2, and most preferably from 3:1 to 1:1.

Using prior methods a less viscous composition is required to allow the mixture to flow into several smaller moulds, thus requiring a high proportion of wet microspheres. The method described herein, which utilises a larger mould, does not require such a low viscosity. Advantageously, reducing the quantity of wet microspheres leads to an overall reduction in the amount of water present in the composition, which in turn reduces the amount of time required to dry the panels to a density of from 50 Kg/m³ to 90 Kg/m³.

### Additive

In some examples, the at least one additive is a reinforcing filler. In the examples of Tables 1to 3, the reinforcing filer comprises a mixture of glass fibres having a relatively shorter length and glass fibres having a relatively longer length. The relatively shorter length is 6 mm and the relatively longer length is 12 mm.

Additionally, or alternatively, the at least one additive may comprise a polymeric foam, such as expanded polystyrene.

In some examples, the composition may also comprise other conventional additives such as surfactants, plasticizers, water, accelerators etc.

### Catalyst

In examples in which the curable resin is phenolic resin, a suitable catalyst is a partial phosphate ester. In some examples, a cure accelerator may also be used, such as para toluene sulphonic acid. In some examples, the acid catalyst may be selected from phosphoric acid or sulfonic acid. In some examples, the acid catalyst may be a derivative of phosphoric acid or sulfonic acid. The acid catalyst could be a mixture of any of the abovementioned acids (or derivatives thereof).

In examples in which the curable resin is the curable bio-based resin polyfurfuryl alcohol resin, a suitable catalyst is a partial phosphate ester. In some examples, a cure accelerator may also be used, such as para toluene sulphonic acid.

In examples in which the curable resin is the curable bio-based resin lignin biopolymer resin, a suitable catalyst is an epoxy-based catalyst.

### Cuboid shaped body of syntactic foam material

Each dimension of the cuboid shaped body may be between 500mm and 1400mm. The volume of the cuboid may therefore be between 0.125m³ (500mm × 500mm × 500mm) and 2.744m³ (1400mm × 1400mm × 1400mm). In one example, the dimensions are 1000mm × 1000mm × 585mm (volume 0.585m³). In another example, the dimensions are 1000mm × 1200mm × 585mm (volume 0.702m³).

A largest face of the cuboid shaped body of syntactic foam material may have an area of from 0.25m² (e.g., 500mm × 500mm) to 1.96m² (e.g., 1400mm × 1400mm), or preferably from 0.64m² (e.g., 800mm × 800mm) to 1.44m² (e.g., 1200mm × 1200mm), or most preferably from 0.8m² (e.g., 800mm × 1000mm) to 1.2m² (e.g., 1000mm × 1200mm).

In some examples, the cuboid shaped mould may be a rectangular cuboid or a cube shaped mould. Accordingly, a rectangular cuboid shaped body or cube shaped body of syntactic foam material is formed.

### Panels

The panels may have a uniform thickness of from 50 mm to 150 mm, or preferably from 60 mm to 120 mm, or most preferably from 70 mm to 110 mm, or optimally 75 mm to 107 mm. A largest face of the panels may have an area of from 70 cm² to 150 cm², or preferably from 80 cm² to 130 cm², or most preferably from 90 cm² to 110 cm², or optimally 100 cm².

The panels may have integrated thermal insulation and passive fire protection. The panels may have a density of from 50 Kg/m³ to 90 Kg/m³, and preferably of 80 Kg/m³. The panels may have a thermal conductivity of 0.031 W/m2K.

In use, intumescent material may be positioned between adjacent panels on site. Thus, if the panels were to shrink in the event of fire, the intumescent material may expand to compensate for the shrinkage.

There is thus described a method of forming panels, panels, and cuboid shaped bodies of syntactic foam material with a number of advantages as described above.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

The term "comprise" is used in this document with an inclusive not an exclusive meaning. That is any reference to X comprising Y indicates that X may comprise only one Y or may comprise more than one Y. If it is intended to use "comprise" with an exclusive meaning then it will be made clear in the context by referring to "comprising only one..." or by using "consisting".

In this brief description, reference has been made to various examples. The description of features or functions in relation to an example indicates that those features or functions are present in that example. The use of the term "example" or "for example" or "may" in the text denotes, whether explicitly stated or not, that such features or functions are present in at least the described example, whether described as an example or not, and that they can be, but are not necessarily, present in some of or all other examples. Thus "example", "for example" or "may" refers to a particular instance in a class of examples. A property of the instance can be a property of only that instance or a property of the class or a property of a sub-class of the class that includes some but not all of the instances in the class. It is therefore implicitly disclosed that features described with reference to one example but not with reference to another example, can where possible be used in that other example but does not necessarily have to be used in that other example.

Whilst endeavoring in the foregoing specification to draw attention to those features of the invention believed to be of particular importance it should be understood that the applicant claims protection in respect of any patentable feature or combination of features hereinbefore referred to and/or shown in the drawings whether or not particular emphasis has been placed thereon.

## Claims

1. A method of forming panels, the method comprising:
mixing a composition comprising curable resin, microspheres and at least one additive in the presence of a catalyst;
transferring the composition to a cuboid shaped mould;
allowing the composition to cure in the cuboid shaped mould to form a cuboid shaped body of syntactic foam material;
demoulding the cuboid shaped body of syntactic foam material;
cutting panels from the cuboid shaped body of syntactic foam material; and
drying the panels.

2. The method according to claim 1, wherein the catalyst is added to the composition after the composition has been mixed for an initial period of time, followed by continued mixing of the composition for a further period of time.

3. The method according to claim 1 or 2, wherein each of the panels cut has substantially the same dimensions.

4. The method according to any of the preceding claims, wherein the composition is transferred to a plurality of cuboid shaped moulds.

5. The method according to any of the preceding claims, wherein the panels are dried at a minimum temperature of 70°C.

6. The method according to any of claims 1 to 5, wherein the panels are dried until the panels have a density of from 50 Kg/m³ to 90 Kg/m³, wherein, optionally, the panels are dried until the panels have a density of from 70 Kg/m³ to 90 Kg/m³.

7. The method according to any of the preceding claims, wherein the panels are cut from the cuboid shaped body of syntactic foam material once the syntactic foam material has cured to a Shore A hardness of at least 50.

8. The method according to any of the preceding claims, wherein a sealant is applied to one or more faces of the panels.

9. The method according to any of the preceding claims, wherein an in use upper face of each respective panel is laminated with a top-skin, wherein, optionally, the top-skin comprises a glass reinforced phenolic top-skin.

10. The method according to any of the preceding claims, wherein the curable resin comprises a phenolic resin or a curable bio-based resin, wherein the curable bio-based resin optionally comprises a polyfurfuryl alcohol resin or a lignin biopolymer resin.

11. The method according to any of the preceding claims, wherein the at least one additive comprises a reinforcing filler, wherein, optionally, the reinforcing filler comprises glass fibres, and wherein the glass fibres comprise a mixture of glass fibres having a relatively shorter length and glass fibres having a relatively longer length.

12. The method according to any of the preceding claims, wherein the at least one additive comprises a polymeric foam, wherein, optionally, the polymeric foam comprises expanded polystyrene.

13. The method according to any of the preceding claims, wherein the microspheres comprise a mixture of wet microspheres and dry microspheres, wherein, optionally, the weight percent ratio of wet microspheres to dry microspheres is from 6:1 to 1:3, is from 4:1 to 1:2, or is from 3:1 to 1:1.

14. The method according to any of the preceding claims, wherein 4 to 8 panels are cut from the cuboid shaped body of syntactic foam material.

15. A cuboid shaped body of syntactic foam material formed by the method of any of claims 1 to 14, or a panel formed by the method of any of claims 1 to 14.
